Europäisches Patentamt

European Patent Office

Office européen des brevets

(19)

(11) **EP 1 550 961 A1**

(12) **EUROPEAN PATENT APPLICATION**

(43) Date of publication:
06.07.2005 Bulletin 2005/27

(51) Int Cl.⁷: $G06F\ 17/30$

(21) Application number: 04250004.1

(22) Date of filing: 02.01.2004

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **Nokia Inc.**
**Irving, TX 75039 (US)**

(72) Inventors:
• **Berger, Adam**
**Pittsburgh, PA 15217 (US)**

• **Romero, Richard**
**Pittsburgh, PA 15027 (US)**
• **Schohn, Gregory**
**Cranberry Township, PA 16066 (US)**

(74) Representative: **Derry, Paul Stefan et al**
**Venner Shipley LLP**
**20 Little Britain**
**London EC1A 7DH (GB)**

(54) **Handling tabular information**

(57) A system for transforming tabular information for rendering on a terminal having a limited-area display includes a network entity. The network entity, in turn, comprises a document converter capable of receiving an electronic document including tabular information comprising table(s). The document converter is capable of converting the table(s) into a linearized representation of the table(s) based upon an ordering of each table, and further based upon at least one label when at least one table includes at least one label. More particularly, the document converter can convert the table(s) by arranging the table(s) such that the table(s) each have a predefined ordering, such as row-major ordering or column-major ordering. Then, the document converter can localize each label when the table(s) includes at least one label, and thereafter linearize the table(s) based upon the arranged table(s), and further based upon each localized label when table(s) includes at least one label.

FIG. 5.

**Description**

The present invention to a system for transforming tabular information for rendering on a terminal having a limited-area display, to a system of localizing at least one label of a table within an electronic document, to terminals comprising a memory capable of storing an electronic document including tabular information, to a method of transforming tabular information for rendering on a terminal having a limited-area display, and to a method of localizing at least one label of a table within an electronic document. In particular, although not exclusively, the invention relates to systems, terminals and methods for reserving memory for transforming tabular information for rendering on terminals having a limited display area.

Businesses and individuals that create electronic documents such as web pages, e-mail messages, and word-processing files typically have a target platform in mind. Often the platform is a desktop computer with reasonable storage capacity, memory, bandwidth, and a large (typically at least 14-inch diagonal) display. Files created with this target platform in mind often contain complex formatting information involving tables, frames, graphics, and navigational aids, all of which define how the document is to be rendered.

A user may wish to access such a document through a medium for which the document was not originally designed, for example, an Internet-enabled mobile phone, a personal digital assistant (PDA), or a handheld computer. These devices may have limited display area, resolution, and rendering capabilities and may be unable to render such documents as they were originally designed, or they may render them in an extremely slow and/or inconvenient manner. Internet-enabled mobile phones, for instance, typically can display only a few lines of text, while their ability to render images may be confined to greyscale or thumbnail-sized images, or no images at all. An extreme example of a display-constrained medium is voice. In this regard, systems, such as AT&T Natural Voices™ Text-to-Speech Engine, allow users to access electronic documents by telephone, by dialling in to a service that uses text-to-speech conversion to dictate the contents of the documents over the phone. Dictation is necessarily a one-dimensional "rendering" of text, however, and cannot express the complex layout information embedded in a two-dimensional table.

Conventionally, devices unable to render such documents as they were originally designed due to limited screen size, resolution, and rendering capabilities take liberties when called upon to render such documents. In this regard, for documents including information formatted in a tabular, two-dimensional manner, some conventional devices omit such tables. Other devices truncate one or more selected columns when a table is too wide to fit within the device's display area. Still other devices perform a rote "linearization" of a table, rendering each cell of the table independently, visiting the cells in the table in a predetermined order, e.g. left to right, top to bottom, typically without regard to the natural ordering of the content of such cells within the table. Further, other devices render just a fractional "viewport" of the entire table, requiring a user of the device to indicate (by pressing an arrow key, for instance) a desire to move the viewport within the table, such as left to right, and therefore expose a different part of the table. And whereas such techniques for rendering tables are sometimes adequate, it would be desirable to design an improved system and method for transforming tabular information for rendering on a limited-area display in a manner such that all of the tabular data is presented, and in a manner that makes the information in the table more comprehensible to a user viewing such information.

In light of the foregoing background, embodiments of the present invention provide an improved system and associated terminal, method and computer program product for transforming tabular information comprising at least one table. Embodiments of the present invention are capable of transforming tables for subsequent rendering by a terminal having a limited-area display in a manner that, in contrast to conventional techniques, presents the contents of the tables in a manner more convenient and more comprehensible to a user viewing such information, such as by localizing labels within the tables to those cells associated with the respective labels. In contrast to conventional techniques for rendering tables on such terminals, embodiments of the present invention are therefore capable of rendering the entire contents of such tables without truncating one or more selected columns of such tables, performing a rote linearization of a table by rendering each cell of the table without regard to the natural ordering of the content of such cells within the table, and without rendering just a fractional viewport of the entire table, thereby requiring a user of the device to move the viewport.

According to one aspect of the present invention, a system is provided for transforming tabular information for rendering on a terminal having a limited-area display. The system includes a network entity, such as a mobile terminal, origin server, proxy/gateway, short messaging service centre (SMSC), multimedia messaging service centre (MMSC), Gateway GPRS Servicing Node (GGSN), user processor or the like. The network entity comprises a document converter capable of receiving an electronic document including tabular information comprising table(s). In this regard, the document converter is capable of converting the table(s) into a linearized representation of the table(s) based upon an ordering of each table, and further based upon at least one label when at least one table includes at least one label. More particularly, the document converter can be capable of converting the table(s) by arranging the table(s) such that the table(s) each have a predefined ordering, such as row-major ordering or column-major ordering. Then, the document converter can localize each label when the table(s) includes at least one label, and thereafter linearize the table(s) based upon the table(s) arranged to have the predefined ordering, and further based upon each localized label when the table(s) includes at least one label.

The document converter can be capable of determining if the terminal supports panning. Then, if if the terminal does support panning, the document converter can receive a selection of either converting the table(s) or forwarding the electronic document, such as to the terminal, without converting the table(s). Thereafter, when the selection comprises converting the table(s), the document converter can convert the table(s).

As will be appreciated, each table can, and typically does, include a plurality of cells organized in at least one row and at least one column. The document converter can therefore be capable of arranging the table(s) by identifying a natural ordering of the table(s), and when the table(s) has a natural ordering other than the predefined ordering, arranging the table(s) that has a natural ordering other than the predefined ordering such that the respective table(s) has the predefined ordering. The document converter can determine the natural ordering in a number of different manners. For example, the document converter can determine a characteristic vector for each cell of the table, and determine a distance between adjacent cells based upon the characteristic vectors for the respective cells. The document converter can thereafter be capable of determining an average distance between pairs of adjacent cells in the same row of the table and an average distance between pairs of adjacent cells in the same column of the table. Then, the document converter can identify the natural ordering of the table based upon the average distances.

The document converter can likewise localize the label(s) within each table in a number of different manners. For example, the document converter can identify at one or more span labels and/or one or more direct labels. As will be appreciated, each span label is associated with a plurality of columns or rows of the table and each direct label is associated with a single column or row of the table. After identifying the span or direct label(s), the document converter can determine a label string for each cell of the table associated with a span label and/or a direct label to thereby localize each span label and each direct label with respect to the cell(s) of the table to which the label(s) refer, each label string including at least one of a span label and a direct label.

The document converter can be capable of identifying direct label(s) based upon a measure of similarity between adjacent rows or adjacent columns of the table. For example, the document converter can determine a measure of similarity between each pair of adjacent rows or columns. For example, the document converter can determine a measure of similarity by determining a characteristic vector for each cell of each pair of adjacent rows or columns, and determining a distance between cells in the same column or row, respectively, based upon the characteristic vectors for the respective cells. Thereafter, the document converter can sum the distances across the columns of the adjacent rows or the rows of adjacent columns to thereby determine the measure of simiarlity between adjacent rows or columns, respectively. Then, after determining the measure of simiarlity, the document converter can identify a pair of adjacent rows or columns that is a given percentage more dissimilar than other pairs of adjacent rows or columns, respectively, based upon the measures of similarity. Then, the document converter can identify a row or column of the identified pair of adacent rows or columns, respectively, as including at least one direct label.

According to other aspects of the present invention, a terminal, method and computer program product are provided for transforming tabular information comprising at least one table. Therefore, embodiments of the present invention provide a system and associated terminal, method and computer program product for transforming tabular information comprising at least one table. The system and associated terminal, method and computer program product of embodiments of the present invention are capable of transforming tables for subsequent rendering by a terminal, such as a mobile telephone. In contrast to conventional techniques, the system, and associated terminal, method and computer program product are capable of transforming tables in a manner such that the terminal is capable of presenting the entire contents of the tables. In addition, the system, and associated terminal, method and computer program product are capable of localizing labels within the tables to those cells associated with the respective labels such that the tables can be rendered in a manner more consistent with the original design of the tables. Therefore, the system and associated terminal, method and computer program product of embodiments of the present invention solve the problems identified by prior techniques and provide additional advantages.

Embodiments of the present invention will now be described, with reference to the accompanying drawings, which are not necessarily drawn to scale, and in which:-

Figure 1 is a schematic block diagram of a wireless communications system according the present invention including a cellular network and a data network to which a terminal is bidirectionally coupled through wireless RF links;

Figure 2 is a schematic block diagram of an entity capable of operating as a terminal, origin server, proxy/gateway, SMSC, MMSC, GGSN, and/or user processor, in accordance with the present invention;

Figure 3 is a schematic block diagram of a mobile station that may operate as a terminal, according to the present invention;

Figure 4 is a functional block diagram of a terminal downloading or otherwise receiving an electronic document including a table, in accordance with the present invention;

Figure 5 is a flowchart illustrating various steps of a method of transforming tabular information in an electronic document, in accordance with the present invention;

Figure 6 is a block diagram of a tree-based data structure representation of an electronic document including a table, in accordance with the present invention;

Figure 7A is a block diagram of a tree-based data structure representation of an electronic document including an implicit table, in accordance with the present invention;

Figure 7B is a block diagram of the tree-based data structure of Figure 7A with the implicit table reformulated as an explicit table, in accordance with the present invention;

Figure 8A is an illustration of a table that may be included within an electronic document, in accordance with the present invention;

Figure 8B is a block diagram of the table of Figure 8A including characteristic vectors for the cells of the table, as well as a similarity measure between cells, in accordance with the present invention

Figure 9 is an illustration of another table that may be included within an electronic document, in accordance with the present invention;

Figures 10A and 10B are schematic block diagrams illustrating portions of the table of Figure 9 rendered on a terminal display, where the table has been linearised without localizing the labels of the table;

Figure 11 is a flowchart illustrating various steps of a method of localizing label(s) of a table that may be included within an electronic document, in accordance with the present invention;

Figure 12 is a block diagram of a label tree representation of a table that may be included within an electronic document, in accordance with the present invention;

Figures 13A-13C are block diagrams of a tree-based data structure representation of an electronic document including a table, where the table is linearised in accordance with the present invention;

Figure 14 is an illustration of a linearised representation of the table of Figure 9, in accordance with an embodiment of the present invention; and

Figure 15 is a schematic block diagram illustrating a portion of the table of Figure 9 rendered on a terminal display, where the table has been transformed in accordance with an embodiment of the present invention.

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

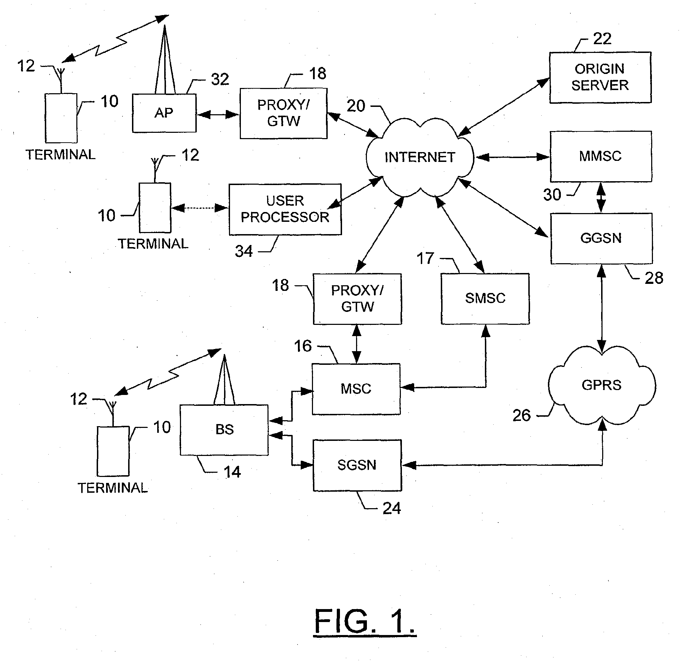

Referring to Figure 1, an illustration of one type of terminal and system that would benefit from the present invention is provided. The system, terminal, method and computer program product of embodiments of the present invention will be primarily described in conjunction with mobile communications applications. It should be understood, however, that the system, terminal, method and computer program product of embodiments of the present invention can be utilized in conjunction with a variety of other applications, both in the mobile communications industries and outside of the mobile communications industries. For example, the system, terminal, method and computer program product of embodiments of the present invention can be utilized in conjunction with wireline and/or wireless network (e.g., Internet) applications.

As shown, a terminal 10 may include an antenna 12 for transmitting signals to and for receiving signals from a base site or base station (BS) 14. The base station is a part of a cellular network that includes elements required to operate the network, such as a mobile switching centre (MSC) 16. As well known to those skilled in the art, the cellular network may also be referred to as a Base Station/MSC/Interworking function (BMI). In operation, the MSC is capable of routing calls to and from the terminal when the terminal is making and receiving calls. The MSC can also provide a connection to landline trunks when the terminal is involved in a call. In addition, the MSC can be capable of controlling the forwarding of messages to and from the terminal, and can also controlling the forwarding of messages for the terminal to and from a messaging centre, such as short messaging service (SMS) messages to and from a SMS centre (SMSC) 17.

The MSC 16 can be coupled to a data network, such as a local area network (LAN), a metropolitan area network (MAN), and/or a wide area network (WAN). The MSC can be directly coupled to the data network. In one typical embodiment, however, the MSC is coupled to a proxy 18, gateway (GTW) or the like, and the proxy is coupled to a WAN, such as the Internet 20. For example, the MSC can be coupled to a Wireless Application Protocol (WAP) GTW, which is coupled to the Internet. In turn, devices such as processing elements (e.g., personal computers, server computers or the like) can be coupled to the terminal 10 via the Internet. For example, as explained below, the processing elements can include one or more processing elements associated with an origin server 22 or the like, one of which being illustrated in Figure 1.

The BS 14 can also be coupled to a signalling GPRS (General Packet Radio Service) support node (SGSN) 24. As known to those skilled in the art, the SGSN is typically capable of performing functions similar to the MSC 16 for packet switched services. The SGSN, like the MSC, can be coupled to a data network, such as the Internet 20. The SGSN can be directly coupled to the data network. In a more typical embodiment, however, the SGSN is coupled to a packet-switched core network, such as a GPRS core network 26. The packet-switched core network is then coupled to another GTW, such as a GTW GPRS support node (GGSN) 28, and the GGSN is coupled to the Internet. Also, the GGSN can be coupled to a messaging centre, such as a multimedia messaging service (MMS) centre 30. In this regard, the GGSN and the SGSN, like the MSC, can be capable of controlling the forwarding of messages, such as MMS messages. The GGSN and SGSN can also be capable of controlling the forwarding of messages for the terminal to and from the messaging centre.

In addition, by coupling the SGSN 24 to the GPRS core network 26 and the GGSN 28, devices such as origin servers 22 can be coupled to the terminal 10 via the Internet 20, SGSN and GGSN. In this regard, devices such as origin servers can communicate with the terminal across the SGSN, GPRS and GGSN. For example, origin servers can provide content to the terminal, such as in accordance with the Multimedia Broadcast Multicast Service (MBMS). For more information on the MBMS, see Third Generation Partnership Project (3GPP) technical specification 3GPP TS 22.146, entitled: Multimedia Broadcast Multicast Service (MBMS), to which the reader's attention is directed.

The terminal 10 can further be coupled to one or more wireless access points (APs) 32. The APs can comprise access points configured to communicate with the terminal in accordance techniques such as, for example, radio frequency (RF), Bluetooth (BT), infrared (IrDA) or any of a number of different wireless networking techniques, including WLAN techniques. Additionally, or alternatively, the terminal can be coupled to one or more user processors 34. Each user processor can comprise a computing system such as personal computers, laptop computers or the like. In this regard, the user processors can be configured to communicate with the terminal in accordance with techniques such as, for example, RF, BT, IrDA or any of a number of different wireline or wireless communication techniques, including LAN and/or WLAN techniques. One or more of the user processors can additionally, or alternatively, include a removable memory capable of storing content, which can thereafter be transferred to the terminal.

The APs 32 and the user processors 34 may be coupled to the Internet 20. Like with the MSC 16, the APs and user processors can be directly coupled to the Internet. In one advantageous embodiment, however, the APs are indirectly coupled to the Internet via a proxy 18. As will be appreciated, by directly or indirectly connecting the terminals and the origin server 22, as well as any of a number of other devices, to the Internet, the terminals can communicate with one another, the origin server, etc., to thereby carry out various functions of the terminal, such as to transmit data, content or the like to, and/or receive content, data or the like from, the origin server. As used herein, the terms "data," "content," "information" and similar terms may be used to interchangeably to refer to data capable of being transmitted, received and/or stored in accordance with embodiments of the present invention. Thus, use of any such terms should not be taken to limit the spirit and scope of the present invention.

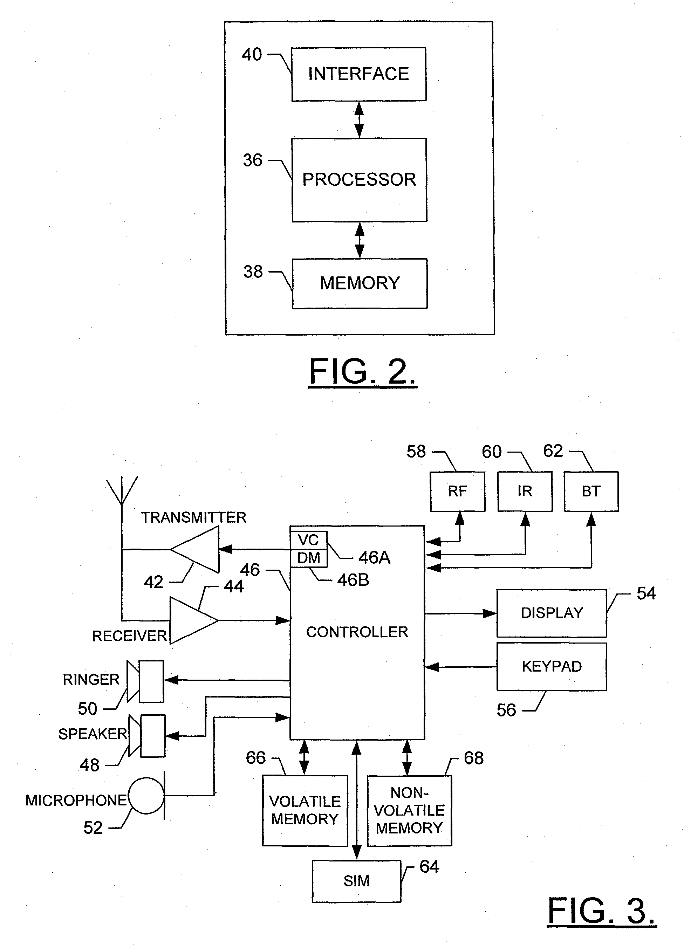

Referring now to Figure 2, a block diagram of a network entity, such as a network entity capable of operating as a terminal 10, origin server 22 proxy 18, SMSC 17, MMSC 30, GGSN 28, and/or a user processor 34, is shown in accordance with one embodiment of the present invention. Although shown as separate entities, in some embodiments, one or more entities may support one or more of a terminal, proxy, origin server, and/or user processor, logically separated but co-located within the entit(ies). For example, a single entity may support a logically separate, but co-located, terminal and proxy. Also, for example, a single entity may support a logically separate, but co-located origin server and user processor.

As shown, the network entity can generally include a processor 36 connected to a memory 38. The processor can also be connected to at least one interface 40 or other means for transmitting and/or receiving data, content or the like. The memory can comprise volatile and/or non-volatile memory, and typically stores content, data or the like.

For example, the memory typically stores software applications, instructions or the like for the processor to perform steps associated with operation of the entity in accordance with embodiments of the present invention. In addition, as described below, the memories can store a document converter capable of converting tabular information for rendering by a terminal 10. Also, for example, the memory can store content transmitted from, or received by, the network entity, such as from another network entity.

Figure 3 illustrates a functional diagram of a mobile station that may operate as a terminal 10, according to embodiments of the invention. It should be understood, that the mobile station illustrated and hereinafter described is merely illustrative of one type of terminal that would benefit from the present invention and, therefore, should not be taken to limit the scope of the present invention. While several embodiments of the mobile station are illustrated and will be hereinafter described for purposes of example, other types of mobile stations, such as portable digital assistants (PDAs), pagers, laptop computers and other types of voice and text communications systems, can readily employ the present invention.

The mobile station includes a transmitter 42, a receiver 44, and a processor, such as a controller 46, that provides signals to and receives signals from the transmitter and receiver, respectively. These signals include signalling information in accordance with the air interface standard of the applicable cellular system, and also user speech and/ or user generated data. In this regard, the mobile station can be capable of operating with one or more air interface standards, communication protocols, modulation types, and access types. More particularly, the mobile station can be capable of operating in accordance with any of a number of first-generation (1G), second-generation (2G), 2.5G and/ or third-generation (3G) communication protocols or the like. For example, the mobile station may be capable of operating in accordance with 2G wireless communication protocols IS-136 (TDMA), GSM, and IS-95 (CDMA). Also, for example, the mobile station may be capable of operating in accordance with 2.5G wireless communication protocols GPRS, Enhanced Data GSM Environment (EDGE), or the like. The mobile station can additionally or alternatively be capable of operating in accordance with any of a number of different digital broadcasting techniques, such as the DVB technique (e.g., DVB-T, ETSI Standard EN 300 744). The mobile station can also be capable of operating in accordance with any of a number of different broadcast and/or multicast techniques, such as the MBMS technique (e.g., 3GPP TS 22.146). Further, the mobile station can be capable of operating in accordance with ISDB-T, DAB, ATSC techniques or the like. Some narrow-band AMPS (NAMPS), as well as TACS, mobile stations may also benefit from embodiments of the present invention, as should dual or higher mode mobile stations (e.g., digital/analogue or TDMA/CDMA/analogue phones).

It is understood that the controller 46 includes the circuitry required for implementing the audio and logic functions of the mobile station. For example, the controller may be comprised of a digital signal processor device, a microprocessor device, and various analogue to digital converters, digital to analogue converters, and other support circuits. The control and signal processing functions of the mobile station are allocated between these devices according to their respective capabilities. The controller thus also includes the functionality to convolutionally encode and interleave message and data prior to modulation and transmission. The controller can additionally include an internal voice coder (VC) 46A, and may include an internal data modem (DM) 46B. Further, the controller may include the functionally to operate one or more software applications, which may be stored in memory.

The mobile station also comprises a user interface including a conventional earphone or speaker 48, a ringer 50, a microphone 52, a display 54, and a user input interface, all of which are coupled to the controller 46. The user input interface, which allows the mobile station to receive data, can comprise any of a number of devices allowing the mobile station to receive data, such as a keypad 56, a touch display (not shown) or other input device. In embodiments including a keypad, the keypad includes the conventional numeric (0-9) and related keys (#, *), and other keys used for operating the mobile station.

The mobile station can also include one or more means for sharing and/or obtaining data from electronic devices, such as another terminal 10, a proxy 18, origin server 22, AP 32, user processor 24 or the like, in accordance with any of a number of different wireline and/or wireless techniques. For example, the mobile station can include a radio frequency (RF) transceiver 58 and/or an infrared (IR) transceiver 60 such that the mobile station can share and/ or obtain data in accordance with radio frequency and/or infrared techniques. Also, for example, the mobile station can include a Bluetooth (BT) transceiver 62 such that the mobile station can share and/or obtain data in accordance with Bluetooth transfer techniques. Although not shown, the mobile station may additionally or alternatively be capable of transmitting and/or receiving data from electronic devices according to a number of different wireline and/or wireless networking techniques, including LAN and/or WLAN techniques.

The mobile station can further include memory, such as a subscriber identity module (SIM) 64, a removable user identity module (R-UIM) or the like, which typically stores information elements related to a mobile subscriber. In addition to the SIM, the mobile station can include other memory. In this regard, the mobile station can include volatile memory 66 and/or other non-volatile memory 68, which can be embedded and/or may be removable. For example, the other non-volatile memory can comprise embedded or removable multimedia memory cards (MMC's), memory sticks, EEPROM, flash memory, hard disk or the like.

The memories 64, 66, 68 can store any of a number of pieces of information, and data, used by the mobile station to implement the functions of the mobile station. For example, the memories can store an identifier, such as an international mobile equipment identification (IMEI) code, international mobile subscriber identification (IMSI) code, mobile station integrated services digital network (MSISDN) code or the like, capable of uniquely identifying the mobile station, such as to the MSC 16. The memories can also store content, such as that received from an origin server 22 and/or a user processor 34. Also, for example, the memories can store one or more presentation applications such as a conventional text viewer, audio player, video player, multimedia viewer or the like. In addition, as described below, the memories can store a document converter capable of converting tabular information for rendering by the mobile station.

As explained in the background section, terminals 10 are generally unable to render electronic documents as the documents were originally designed due to the limited display area, resolution, and rendering capabilities of such terminals. Many terminals, for example, are typically only capable of rendering on a display (e.g., display 54) a few lines of text, and either greyscale, thumbnail-sized images or no images at all. In this regard, terminals are generally unable to render tabular information of electronic documents as the tabular information was originally designed. For example, some conventional devices omit such tabular information. Other devices truncate selected column(s) of tables, or perform a rote linearization of a table, rendering each cell of the table independently, typically without regard to the natural ordering of the content of such cells within the table. Still other devices render just a fractional viewport of the entire table, requiring a user of the device to move the viewport within the table, such as left to right, and therefore expose a different part of the table.

Embodiments of the present invention are therefore capable of transforming electronic documents for rendering by a terminal having a display of limited display area, resolution and/or rendering capabilities. More particularly, embodiments of the present invention are capable of transforming tabular information of electronic documents for rendering by such a terminal. In contrast to conventional techniques for rendering tables on such terminals, embodiments of the present invention are therefore capable of rendering the entire contents of such tables without truncating one or more selected columns of such tables, performing a rote linearization of a table by rendering each cell of the table without regard to the natural ordering of the content of such cells within the table, and without rendering just a fractional viewport of the entire table, thereby requiring a user of the device to move the viewport.

In accordance with embodiments of the present invention, the tabular information of electronic documents generally comprises one or more tables, each encapsulating a two-dimensional matrix of content, such as data, information or the like. As will be appreciated by those skilled in the art, such a two-dimensional table generally includes at least one row and at least one column. Also, such a table may, but typically does not, include complex structures (e.g. nested tables or images). In addition, a high level of both syntactic and semantic coherence typically exists between the row(s) and column(s) of such a table.

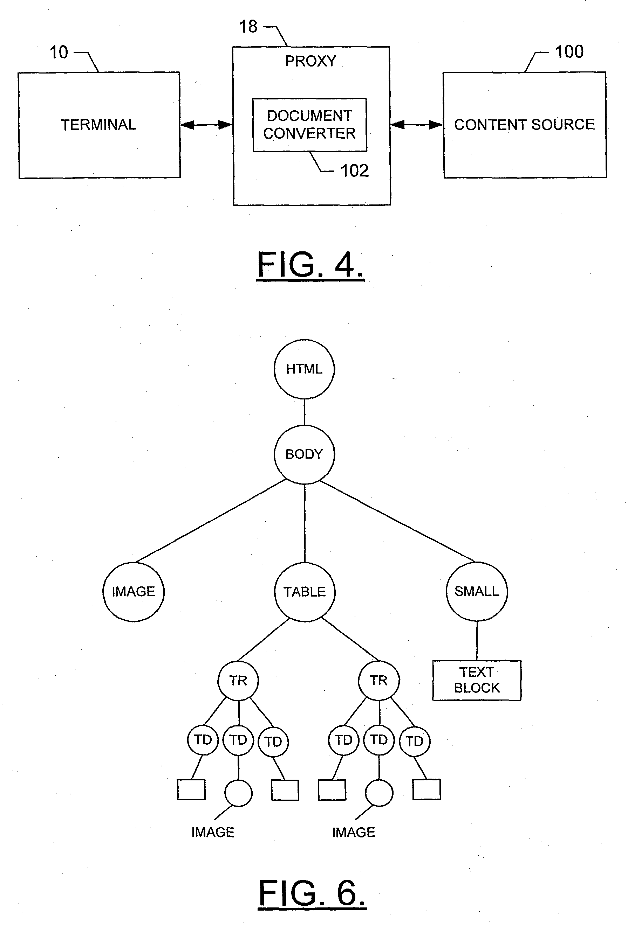

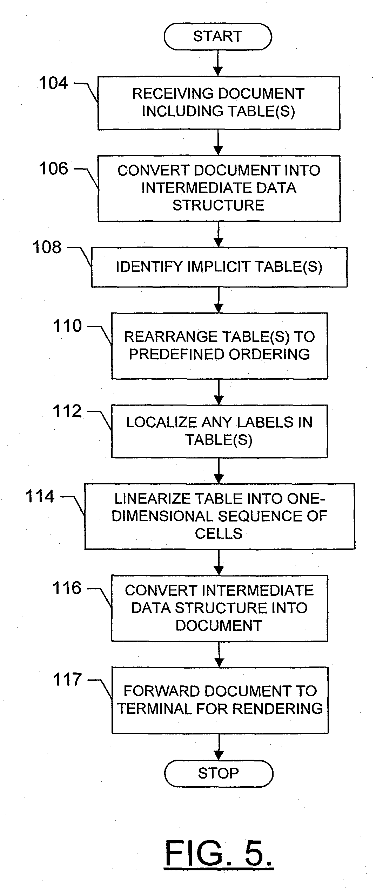

Reference is now drawn to Figures 4 and 5, which illustrate a functional block diagram and flowchart, respectively, of a proxy 18 and method of transforming tabular information in an electronic document, in accordance with one embodiment of the present invention. More particularly, Figure 4 illustrates a functional block diagram of a proxy receiving, and thereafter forwarding, an electronic document from a content source 100, such as a terminal 10, an origin server 22, a SMSC 17, a MMSC 30, a GGSN 28, a user processor 34 or the like, in accordance with one advantageous embodiment of the present invention. Before forwarding the electronic document, however, the proxy is capable of operating a document converter 102, which is capable of receiving an electronic document, and thereafter transforming tabular information of the document for rendering by a terminal 10. The proxy can then forward the electronic document, including the transformed tabular information, to the terminal for rendering by the terminal, or more particularly a display (e.g., display 56) of the terminal.

Although, the proxy 18 operates the document converter 102 as shown and described herein, it should be understood that the document converter can be operated from any of a number of different network entities within the system including, for example, the terminal 10 itself or the content source 100. In this regard, the document converter can be implemented on a single network entity, or alternatively, portions of the document converter can be implemented on more than one network entity. Also, as described herein, the document converter typically comprises software capable of being stored within memory (e.g., memory 38), and operated by a processor (e.g., processor 36). It should be understood, however, that the document converter can alternatively comprise firmware or hardware, without departing from the spirit and scope of the present invention. Further, it should be understood that the document converter can be capable of performing operations on the electronic document other than transforming the tables to facilitate rendering of the electronic document by the terminal. For more information on various such operations, see, for example, U.S. Patent Application No. 09/851,404, entitled: Reorganizing Content of an Electronic Document, filed May 8, 2001, and published March 6, 2003 as U.S. Patent Application Publication No. 2003/0046318, to which the reader's attention is directed.

As shown in block 104 of Figure 5, a method of transforming tabular information comprising at least one table includes the document converter 102 receiving an electronic document from the content source 100. In accordance with embodiments of the present invention, the electronic document includes one or more tables, and each table includes at least one row of content and at least one column of content. The electronic document can have any of a number of different formats. For example, the electronic document can comprise a Hypertext Transfer Protocol (HTTP) document, e-mail document, Portable Document Format (PDF) document, postscript document, ASCII text format (TXT) document, Extensible Markup Language (XML) document, Microsoft® Word™ (DOC) document, Microsoft® Excel™ (XLS) document or the like.

After receiving the electronic document, the document converter 102 can convert the electronic document into an intermediate data structure representation of the electronic document, as shown in block 106. The document converter can convert the electronic document in any of a number of different manners to generate any of a number of different intermediate data structures capable of representing the electronic document. In this regard, the document converter can convert the electronic document into an intermediate data structure comprising a common internal tree-based representation of the electronic document. For example, the document converter can convert the electronic document into an Extensible Hypertext Markup Language (XHTML) Document Object Model (DOM) representation of the electronic document.

The document converter 102 can convert the electronic document into an XHTML DOM data structure in a number of different manners. In one embodiment, for example, the data converter converts the electronic document by transforming the electronic document into an HTML document (if not already an HTML document), transforming the HTML document into an XHTML document, and thereafter transforming the XHTML document into an XHTML DOM data structure. To transform the electronic document into documents of the foregoing formats to generate an XHTML DOM data structure, the document converter can be capable of performing any of a number of different known conversion routines.

The document converter 102 can additionally or alternatively be capable of communicating with another software, hardware or firmware module operating on the proxy 18 or another network entity, where the other module is capable of performing one or more conversion routines to aid the document converter in transforming the electronic document into an XHTML DOM data structure. For example, the document converter can be capable of communicating with the wvWare software package, developed under the wvWare Project, to transform DOC documents into HTML documents. Also, for example, the document converter can be capable of communicating with the xlHtml software package, developed under the Chicago Project, to transform XLS documents into HTML documents. In turn, for example, the document converter can be capable of communicating with the HTML Tidy software package, developed under the Tidy Project, to transform HTML documents into XHTML documents.

Further, for example, the document converter 102 can be capable of communicating with an XML parser, such as the Xerces XML parser software package (developed under the Apache XML Project), to transform XHTML documents into XHTML DOM data structures. Irrespective of how the document converter converts the electronic document into the data structure representative of the electronic document, the data structure can, but need not, be stored in volatile memory as opposed to non-volatile memory where the document converter and electronic document typically reside. As will be appreciated, the data structure typically includes a number of nodes that correspond to tags of the converted XHTML document, which can be based upon tags of the underlying HTML document. For example, consider the following source code for an HTML document:

```
<html>
<body>
<img src="http://www.domain.com/img/image.gif"/>
<table>
<tr>
<td>This is the first cell</td>
<td><img src="http://www.domain.com/img/image2.gif"/> </td>
<td>This is the third cell</td>
</tr>
<tr>
<td>This is the fourth cell</td>
<td><img src="http://www.domain.com/img/image3.gif"/> </td>
<td>This is the sixth cell</td>
</tr>
</table>
<small>
A text block
</small>
</body>
</html>
```

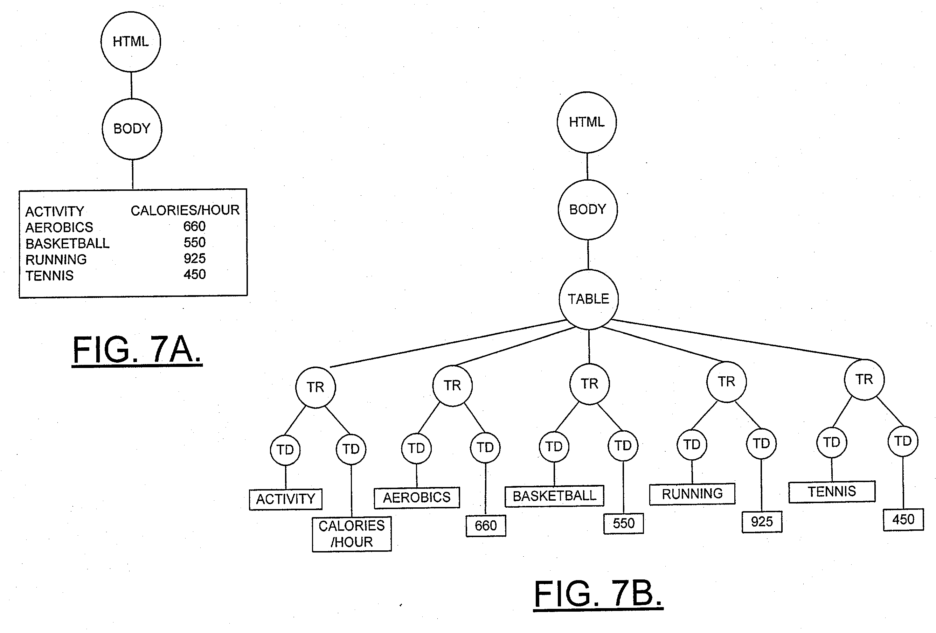

As shown by the above source code, the HTML document includes a table including two rows and three columns, where the second column of each row includes an image. The HTML document also includes a third image and a block of text in a small font. From such an HTML document, the document converter can generate an XHTML DOM data structure such as that shown in Figure 6.

Irrespective of how the document converter 102 converts the electronic document into the intermediate data structure representation of the electronic document, as or after the document converter converts the electronic document to the intermediate data structure, the document converter can identify any "implicit" tables within the intermediate data structure, as shown in block 108 of Figure 5. As will be appreciated, for tables otherwise identified in the formatting of the electronic document, such as by tags (i.e., "<table></table>") in an HTML document, the document converter typically need not specifically identify such tables. For other tables, however, the electronic document may be designed such that information is rendered in tabular form but does not otherwise include formatting designating such information as a table. The document converter can identify such "implicit" tables, where the implicit tables are typically not otherwise represented by table nodes in the data structure after the document converter has converted the electronic document into the data structure. Thereafter, document converter can reformulate the data structure to include table nodes for such tables.

Consider, for example, the following ASCII formatted text within a TXT document:

| activity | calories/hour |
|---|---|
| aerobics | 660 |
| basketball | 550 |

(continued)

| activity | calories/hour |
|---|---|
| running | 925 |
| tennis | 450 |

Visually, the preceding ASCII formatted text clearly represents a table. The TXT format, however, does not contain a mechanism (e.g., tags) for explicitly denoting such text as a table. Depending upon the technique utilized by the document converter to convert such a TXT document into a data structure, the document converter may recognize such a block of text as a table. In various other instances, however, the document converter 102 may not recognize such a block of text as a table. In such instances, the document can generate a data structure such as that shown in Figure 7A. As shown, the data structure identifies the text as a block of unstructured text. Thus, the document converter can also identify implicit tables in instances in which the electronic document includes implicit tables not otherwise recognized by the document converter during conversion of the electronic document, or otherwise represented as table nodes in the data structure.

The document converter 102 can identify implicit tables in any of a number of different known manners, including via dedicated parsers and automatic learning techniques. For examples of a number of known techniques for identifying implicit tables, see Jianying Hu et al., A System of Understanding and Reformulating Tables, FOURTH ICPR WORKSHOP ON DOCUMENT ANALYSIS SYSTEMS (2000); Mathew Hurst & Shona Douglas, *Layout and Language: Preliminary Investigations in Recognizing the Structure of Tables,* PROCEEDINGS OF THE INTERNATIONAL CONFERENCE ON DOCUMENT ANALYSIS AND RECOGNITION (ICDAR) 1043-1047 (1997); and Hwee Tou Ng et al., Learning to Recognize Tables in Free Text, Proceedings of the 37th Annual Meeting of ACL 443-450 (1999), to which the reader's attention is directed.

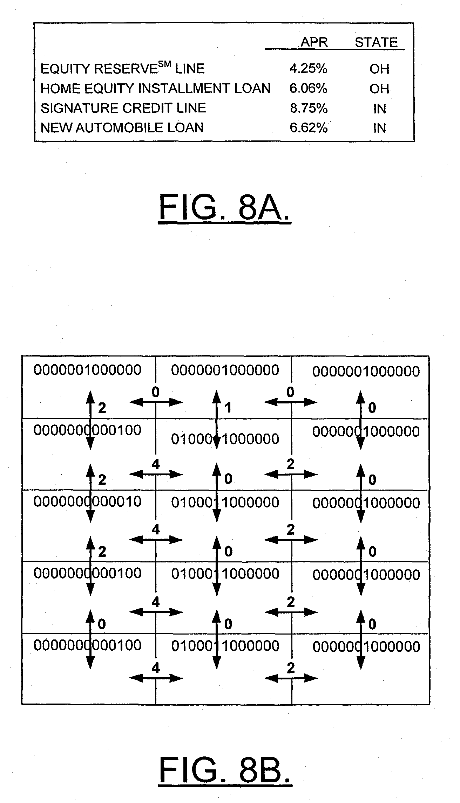

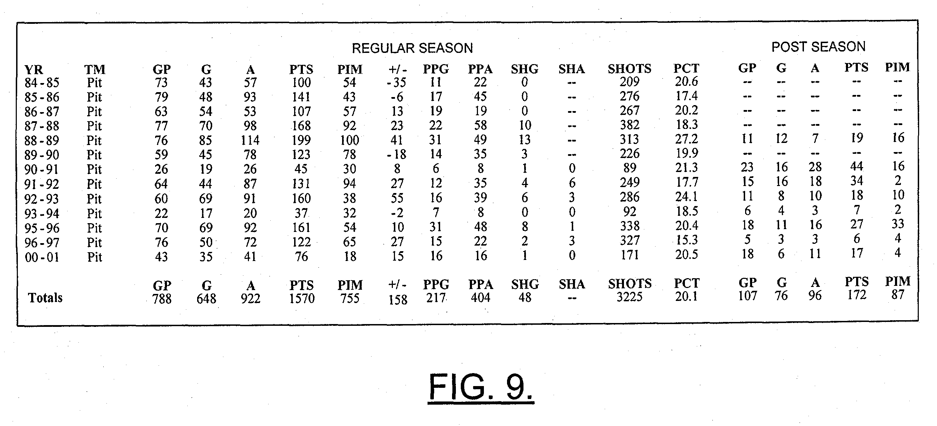

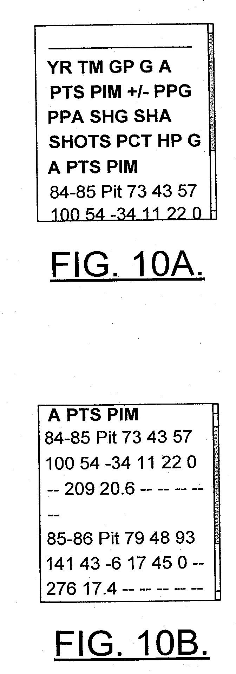

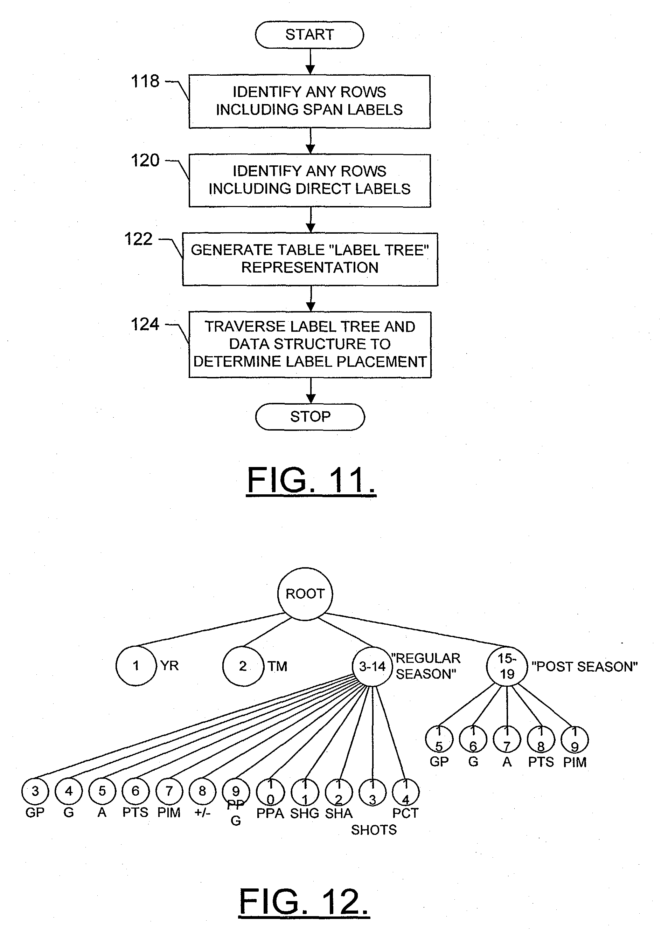

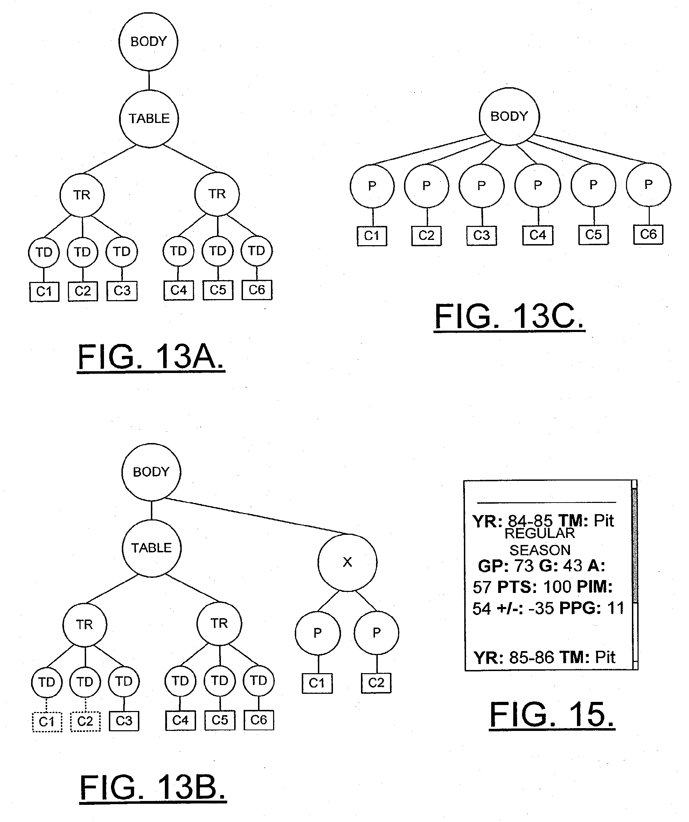

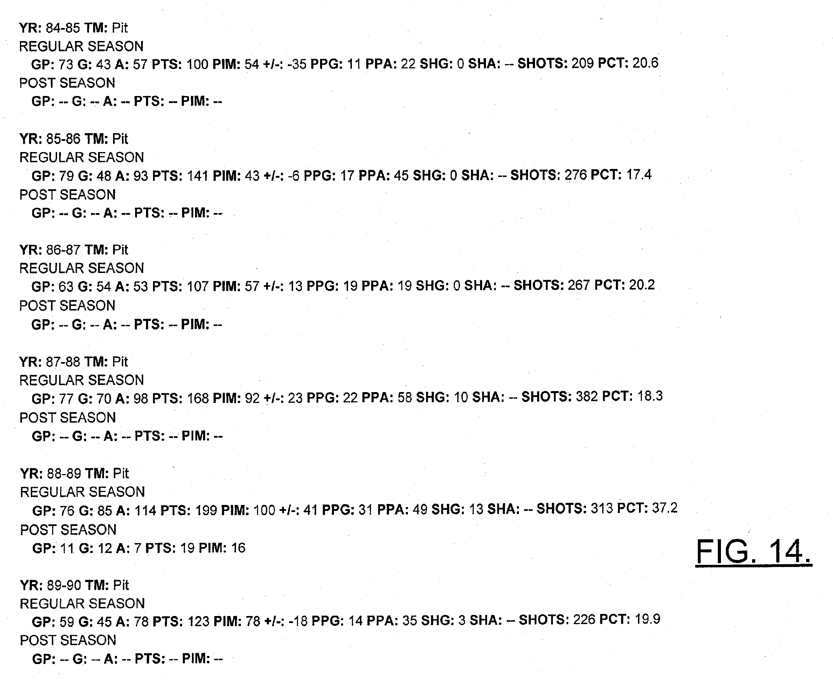

Irrespective of how the document converter 102 identifies implicit tables, if the document converter identifies one or more implicit tables in the electronic document, the document converter can produce or reformulate the data structure to identify the text as a table. For example, the document converter can recognize a block of text as a table, and during conversion of the electronic document into an HTML document, generate an HTML document formatted to identify the block of text as a table, such as by encapsulating the block of text in appropriate HTML tags (e.g., <table>, <tr>, <td>, etc.). Continuing the example above for the block of text in the TXT document, the document converter can identify the block of text as an implicit table, and thereafter and produce or reformulate the data structure to include the implicit table as an explicit table, such as that shown in Figure 7B.

After the document converter 102 has generated a data structure representation of the electronic document, including the reformation of any implicit tables as explicit tables, the document converter can rearrange the tables of the electronic document to have a predefined ordering, as shown in block 110. In this regard, the document converter can identify the natural ordering of the cells in the tables of the electronic document, whether row-major ordering or column-major ordering. As will be appreciated by those skilled in the art, a table generally has row-major ordering when content in the table is arranged by rows. Conversely, a table generally has column-major ordering when content in the table is arranged by columns.

After identifying the natural ordering of the cells in the tables of the electronic document, the document converter 102 can rearrange the tables such that all of the tables have a predefined ordering. In one typical embodiment, for example, the document converter can rearrange the tables such that all of the tables have a row-major ordering. In such instances, for those tables with column-major ordering, the document converter can transpose the table such that the natural ordering becomes row-major. It should be understood, however, that the document converter can alternatively rearrange the tables such that the tables have column-major ordering, with the other operations of the document converter adjusted accordingly.

The document converter 102 can identify the natural ordering of the tables in any of a number of different manners. For example, the document converter can be configured to search for patterns of similarities among adjacent cells in each table. In this regard, consider for example a column-major table having a second row including an image in each cell. The fact that all the cells in such a row are similar to one another is evidence, albeit typically not conclusive, that the table has column-major ordering. Alternatively, for example, consider a row-major table having a second column including an image in each cell, and a fifth column including a number followed by a percentage sign in each column. The fact that the cells in a column are similar to one another is evidence, again typically not conclusive, that the table has row-major ordering.

In one typical embodiment, the document converter 102 identifies the natural ordering of the tables by representing the information in each cell as a characteristic vector. For example, each cell can be represented by a characteristic binary vector of a given length N, where each position in the vector corresponds to a value of a predicate (a yes/no question) representative of a characteristic of the information in the respective cell. As will be appreciated, the characteristic vector representation is a way to encode the structural characteristics of each cell of the table. Thus, similar-looking cells typically have similar characteristic vector representations.

The characteristic vector can include any of a number of bits (N) corresponding to any of a number of different predicates. For example, the characteristic vector can include thirteen bits (i.e., N = 13), with each bit corresponding to a predicate as follows:

bit 1 is "1" iff (i.e., "if and only if") the cell contains an image
bit 2 is "1" iff the cell contains a digit
bit 3 is "1" iff the cell contains a hyperlink
bit 4 is "1" iff the cell contains bold text
bit 5 is "1" iff the cell contains italic text
bit 6 is "1" iff the cell contains punctuation
bit 7 is "1" iff the cell contains between 0 and 5 characters
bit 8 is "1" iff the cell contains between 6 and 10 characters
bit 9 is "1" iff the cell contains between 11 and 15 characters
bit 10 is "1" iff the cell contains between 16 and 20 characters
bit 11 is "1" iff the cell contains between 21 and 25 characters
bit 12 is "1" iff the cell contains between 26 and 30 characters
bit 13 is "1" iff the cell contains more than 31 characters

Reference is now briefly made to Figures 8A and 8B, which illustrate a table and the characteristic vectors for the cells of the table, respectively. As shown for such a table, for example, the cell in the first row, first column includes a blank. As such, the cell in the first row, first column can be represented by the characteristic vector 0000001000000, where the only "1" bit value corresponds to a cell including between 0 and 5 characters. In contrast, the cell in the second row, first column includes the phrase "equity reserve[SM] line," which can be represented by the characteristic vector 0000001000000. As can be shown, the only "1" bit value in the preceding corresponds to a cell including between 21 and 25 characters (the phrase including, counting spaces, twenty-one characters).

After representing the information in each cell as a characteristic vector, the document converter 102 can determine a similarity measure between cells in the table based upon the characteristic vectors. The document converter can determine a similarity value between adjacent cells in a number of different manners, such as by determining the "Manhattan" distance between adjacent cells. In this regard, the distance can be determined for two adjacent cells by determining the number of bits that differ between the characteristic vectors of the respective cells. For example, the distance between 0111 and 1110 is two. As will be appreciated, then, the smaller the distance between adjacent cells, the more similar the respective cells. See Figure 8B for the distance measure between the cells of the table of Figure 8A determined in accordance with an embodiment of the present invention.

As will also be appreciated, in various instances, one or more of the predicates corresponding to respective bit value(s) of a characteristic vector may be more indicative of cell similarity than other predicates. For example, the first bit in the above thirteen bit characteristic vector described above may be more indicative of cell similarity than the tenth bit. Thus, in accordance with embodiments of the present invention, one or more of the bits can have an associated weight such that the distance between two characteristic vectors includes, in the summation, the associated weight when the respective bits differ between adjacent cells.

Irrespective of exactly how the similarity measure, or distance, between adjacent cells of the table is determined, after determining the distance, the document converter 102 can determine whether the table has row-major ordering or column-major ordering. More particularly, the document converter can determine the ordering of the table based upon the distances across various rows and columns of the table. For example, the document converter can determine the average distance, $S_H$, between pairs of adjacent cells that are in the same row in the table; and determine the average distance, $S_V$, between pairs of adjacent cells that are in the same column in the table. As will be appreciated, a lower average distance between adjacent cells in the same row typically indicates that the table's rows contain similar cells, which suggests that the table may have column-major ordering. Conversely, a lower average distance between adjacent cells in the same column indicates that the table's columns contain similar cells, which suggests that the table may have row-major ordering. Written notationally, then, the document converter can determine $S_H$ and $S_V$ in accordance with the following:

$$S_H = \frac{1}{R * (C - 1)} \sum_{i=1}^{R} \sum_{j=1}^{C-1} \Delta_c \left( x_{i,j}, x_{i,j+1} \right) \qquad (1)$$

$$S_V = \frac{1}{(R-1)*C} \sum_{i=1}^{R-1} \sum_{j=1}^{C} \Delta_c \left( x_{i,j}, x_{i+1,j} \right)$$

(2)

As shown in the preceding equations (1) and (2), i = 1, ..., R represents the rows in the table; and j = 1, ..., C represents the columns. Also, $x_{i,j}$ and $x_{i+1,j}$ represent adjacent cells of the table, and $\Delta_c$ represents the distance between respective adjacent cells. For the table of Figure 8A, and from the distances shown in Figure 8B, then, $S_H$ = 2.4 (i.e., 24/10) and $S_V$ = 0.583 (i.e., 7/12).

Once the document converter 102 has determined the average distances between pairs of adjacent cells in the same row $S_H$ and column $S_V$, the document converter can determine whether the table has row-major or column-major ordering. For example, the document converter can determine the ordering by comparing the average distances. If the average distance between pairs of adjacent cells in the same column $S_V$ is larger than the average distance between pairs of adjacent cells in the same row $S_H$ (i.e., $S_V > S_H$), the document converter can determine that the table has column-major ordering, otherwise the table has row-major ordering. To rearrange the tables of the electronic document to have a predefined ordering, such as row-major ordering, the document converter can then transpose tables having column-major ordering such that the tables all have row-major ordering. In notational terms, a table of an electronic document can be transposed by reorganizing the DOM tree so that each cell $x_{i,j}$ is exchanged with each cell $x_{i,j}$.

As will be appreciated, in various instances $S_H$ and $S_V$ may be very similar, which can result in a table being transposed to have an ordering opposite from that desired. Thus, the document converter 102 can be capable of weighting $S_H$ or $S_V$ during the comparison such that the document converter may be more or less likely to transpose a given table. For example, the document converter can multiply $S_H$ by a bias, C, having a value of one or greater. Then, during the comparison of $S_H$ and $S_V$ (i.e., $S_V > C * S_H$), as the bias increases the document converter becomes less likely to transpose a table when the document converter transposes column-major tables, and $S_H$ and $S_V$ have similar values.

After rearranging the tables to have a predefined ordering, the document converter 102 can linearise the tables into a one-dimensional sequence of the contents of the cells of the tables, where the linearised contents are not otherwise contained within a table. Advantageously, however, before linearising the tables, however, the document converter can localize any labels included within the tables, as shown in block 112 of Figure 5. As will be appreciated, a number of tables include cells that function as labels for one or more other cells. In this regard, when a label refers to a single row or column of cells, the label is often referred to as a "direct" label. In contrast, when a label refers to more than one row or column, the label is often referred to as a "span" label. As shown in the table of Figure 9, for example, labels such as "YR," "TM," "GP" and "G" constitute direct labels, while labels "Regular Season" and "Post Season" constitute span labels.

As will also be appreciated, linearising a row-major table that has column labels, such as that shown in Figure 9, can cause the column labels to become separated from the cells to which such labels refer. As such, the rendered table can be difficult to comprehend on a terminal 10 with limited display area. In this regard, see Figures 10A and 10B, which illustrate portions of the table of Figure 9 on a terminal display, where the table has proceeded through a straightforward linearization process. As can be seen, the row labels are segregated from the cells to which such labels refer, thus making the table difficult to understand. More particularly, as shown, the row including a number of direct labels (e.g., "YR," "TM," "GP," "G," etc.) is segregated visually from the data to which it refers, namely the cells in the respective columns beneath the respective labels.

To avoid segregating column labels from the data to which such labels refer, then, the document converter 102 of one advantageous embodiment localizes labels (if any) located within the tables of the electronic document. More particularly, the document converter rearranges the labels such that the labels are located proximate with the data such labels describe. As such, the document converter can aid a user's understanding of a subsequently rendered table.

The document converter 102 can localize labels within the tables of an electronic document in any of a number of different manners. One particularly advantageous technique for localizing labels is described below with reference to Figure 11. As described below, the document converter localizes labels for a row-major table having at least one row including at least one label. It should be understood, however, that the document converter can localize labels in a number of other situations. For example, the document converter can localize labels for a column-major table having at least one column including at least one label. In such instances, the process of localizing labels can proceed as described herein, typically with operations performed on the basis of rows being performed on the basis of columns, and vice versa. It also should be understood that the document converter need not localize labels within the tables, particularly for those tables not containing any labels. Typically, the document converter also does not localize labels when the document converter rearranges the tables into row-major tables, and the tables do not include any rows with labels.

In accordance with one technique, the document converter 102 can localize labels by first identifying rows that include span labels, i.e., labels that span more than one column, as shown in block 118 of Figure 11. More particularly, the document converter can examine the cells of a predetermined number of rows (e.g., three rows) for tags identifying the cells including table data (e.g., <td>) or a table header (e.g., <th>), where the cells also have a multicolumn attribute (e.g., "colspan"). As will be appreciated, such an attribute typically denotes a cell that spans more than one column of the table. In the table of Figure 9, for example, the first row includes two cells (i.e., "Regular Season" and "Post Season") that each span more than one column.

After identifying rows that include span labels, the document converter 102 can identify any rows that include direct labels, i.e., labels that each refer to a single column, as shown in block 120. Similar to before, the document converter can examine the cells of a predetermined number of rows (e.g., three rows) for any direct labels. The document converter can locate the direct labels in any of a number of different manners. In one embodiment, for example, the document converter locates direct labels based upon a similarity measure (e.g., distance) between adjacent rows, where the similarity measure between adjacent rows is based upon the similarity measure between the cells of adjacent rows, as such is explained above. In this regard, as will be appreciated by those skilled in the art, a row of direct column labels often differs from the rest of the rows in the table in a number of different respects. For example, the second row of Figure 9, which consists of direct column labels, is composed entirely of letters, whereas the rows beneath the second row consist almost entirely of numbers.

To locate the direct labels of a table, then, the document converter 102 can determine the similarity, or distance, between adjacent rows of the table, where the similarity is determined based upon the similarity of vertically-adjacent cells within the respective rows. Written notationally, the document converter can determine the distance $\Delta_R$ between adjacent rows of the table in accordance with the following equation (3):

$$\Delta_R\left(i, i+1\right) = \sum_{j=1}^{C} \Delta_c\left(x_{i,j}, x_{i+1,j}\right), i = m, \dots, R$$

$$(3)$$

In the preceding, m represents the first row of the table that does not include at least one span label.

After determining the distances between adjacent rows, the document converter 102 can identify any pair of adjacent rows that has a significantly greater dissimilarity than any pair of subsequent adjacent rows, where significant dissimilarity is indicative of the first row of the respective pair including direct labels. In other terms, the document converter can determine if the distance between any pair of adjacent rows is significantly greater than the distance between any subsequent pair of adjacent rows, then identify the first row of any such pair as including direct labels. More particularly, for example, the document converter can compare each $\Delta_R(i,i+1)$ with the distances between subsequent pairs of adjacent rows, beginning with $\Delta_R(i+1,i+2)$. Then, for the first $\Delta_R(i,i+1)$ that is at least a given percentage (e.g., 50%) greater than any subsequent pair of adjacent rows, row i can be identified as a row including direct labels.

Once the document converter 102 has identified span labels and/or rows including direct labels, the document converter can generate a label tree representation of the table, such as in accordance with any of a number of known techniques, as shown in block 122 of FIG 11. More particularly, for example, the document converter can generate another data structure for use in localizing the labels, where the data structure reflects the association of the span and direct column labels to the individual cells of the table. This data structure, which may be referred to as a "label tree," is capable of capturing the structure of the previously identified span and direct column labels. In this regard, Figure 12 illustrates a label tree representation of the table of Figure 9 in accordance with one exemplar embodiment.

After the document converter 102 has generated the label tree representation of the table, the document converter can localize the labels of the table. As shown in block 124, the document converter can localize the labels by traversing the label tree and data structure representations to determine placement of the labels within a linearised representation of the table. As such, the table can thereafter be linearised to include the labels located proximate the respective table cells. As will be appreciated, the label tree representation and data structure can be traversed in any of a number of different manners. In one embodiment, for example, the document converter examines each cell of each column (i = 1, ..., C) of each row (j = 1, ..., R), excluding any cells(s) without content (i.e., blank cell(s)) and any cells(s) including span or direct labels.

For each column of each row excluding blank and label cell(s), then, the document converter can define a label path $x_k = \{x_1, x_2, ...x_L\}$ from the root node to leaf L of a branch of the tree label representation of the table (see Figure 12), where each leaf is associated with a respective column of the table. In addition, the document converter can define a label string, $s_{i,j}$, where the label string is initialized with a value of zero for each cell. For each node of each label path (k = 1, ..., L) of the label tree representation of the table, if $x_k$ comprises a span label and $x_{k+1}$ comprises the first node under $x_k$, the document converter 102 can add a new line to label string $s_{i,j}$, along with the span label, another new line and at least one character space (e.g., tab). If $x_k$ comprises a direct label, on the other hand, the document converter can add a direct label to the label string $s_{i,j}$ along with a separator, such as a colon. Then, after examining the table cells and generating the label strings $s_{i,j}$, the document converter can append each label string to a respective cell $x_{i,j}$, such as during linearization of the table, described below.

Consider, for example, the table of Figure 9 and the label tree representation of Figure 12, where the table includes a number of span and direct labels. In such an instance, examination of the cells of the table can begin with cell (3,1), which includes the value "84-85"). Following the root node of the label tree representation to the leaf associated with the third row, the document converter 102 can define a label path $x_k = \{x_1 = \text{"YR"}\}$. In addition, the document converter can define a label string, $s_{3,1}$, where the label string is initialized with a value of zero. Then, because $x_1$ comprises a direct label, the document converter can add the direct label to the label string $s_{i,j}$ along with a colon such that $s_{3,1} = \{\text{"YR:"}\}$. The same process can then be repeated for cell (3,2), where $s_{3,2} = \{\text{"TM:"}\}$. For cell (3,3), on the other hand, the document converter can define a label path $x_k = \{x_1 = \text{"Regular Season"}; x_2 = \text{"GP"}\}$. After initializing label string $s_{3,3}$ to zero, because $x_1$ comprises a span label and $x_2$ (i.e., $x_{i+1}$) comprises the first node under $x_1$, the document converter can add new line to label string $s_{3,3}$, along with the span label, another new line and a tab. Then, for $x_2$, the document converter can further add the direct label and a colon to label string $s_{3,3}$. The label string $s_{3,3}$ can therefore appear as follows: $s_{3,3} = \{\backslash n; \text{"Regular Season"}; \backslash n; \backslash t; \text{"GP:"}\}$, where "\n" and "\t" represent a new line and a tab, respectively, when a label string is rendered by a terminal 10.

Again referring to Figure 5, once the document converter 102 has determined the label strings $s_{i,j}$ to thereby localize the labels, the document converter can linearise the table into a one-dimensional sequence of cells, as shown in block 114. The document converter can linearise the table in any of a number of different manners. In one embodiment, for example, the document converter can linearise the table by replacing the table with one or more individual paragraphs (e.g., <p>), where each paragraph includes one or more of the cells of the original table. In this regard, the document converter can traverse a table having row-major ordering, typically beginning with the top, leftmost cell and ending with the bottom, rightmost cell, and move the contents of the respective cells into a respective paragraph of a linearised representation of the table, particularly when the document converter arranges the table(s) of the electronic document to have row-major ordering.

In one embodiment, the document converter 102 can linearise the table by examining the data structure representation of the table. Consider, for example, the data structure representation of an electronic document including a table shown in Figure 13A. For each table node, the document converter can create a new temporary node (shown as node "X" in Figure 13B) in the data structure at the same level as a respective table node. Then, for each data node (i.e., <td>) of each row node (i.e., <tr>) that represents a cell of the table, typically excluding blank and label cells, the document converter can append a paragraph node (e.g., <p>) as a child of node "X." As shown in Figure 13B, the document converter can thereafter move the content node (i.e., C1, C2, etc.) of each data node, or more particularly the contents $x_{i,j}$ of a respective cell, underneath the respective paragraph node, only the first and second content nodes C1 and C2 of which are shown in Figure 13B as being moved. In addition to moving each content node underneath a respective paragraph node, the document converter can append a respective label string $s_{i,j}$ to the contents of the respective cell, if such cell has a corresponding label string.

After moving the content node of each data node of each row node under respective paragraph nodes, the document converter 102 can delete the table node and the associated row node(s), data node(s) and content node(s) underneath the table node. Although the document converter can delete the table node and associated nodes after moving the content node of each data node of each row node, the document converter can alternatively delete each node after moving or otherwise deleting all of the children (i.e., associated nodes) of a respective node. Thus, for example, the document converter can delete each table data node (i.e., <td>) after moving the respective content nodes (i.e., C1, C2, C3, etc.) underneath a respective paragraph node. Likewise, for example, the document converter can delete each table row node (i.e., <tr>) after deleting the respective table data nodes (i.e., <td>).

Irrespective of when the document converter 102 deletes the table node, however, after moving the content node of each data node of each row node under respective paragraph nodes, the document converter can excise node "X" from the data structure, and move each of the nodes underneath node "X" up in the data structure representation of the electronic document, as shown in Figure 13C. Thus, as shown, each content node (i.e., C1, C2, etc.), representing each cell $x_{i,j}$ of the table (excluding blank and label cells) can be included within a respective paragraph node of the data structure representation of the electronic document. As will be appreciated, in such an instance, each cell of the original table, including any appended label strings $s_{i,j}$, can be included underneath a separate paragraph node. It should be understood, however, that the document converter can alternatively linearise the table such that more than one cell is included underneath a separate paragraph node. For example, the document converter can linearise the table such that each row of cells of the table is included underneath a respective paragraph node. For an example of such an instance, see Figure 14, which represents a linearised representation of the table of Figure 9, where one or more cells of the table include appended label strings.

Once the document converter 102 has linearised the table, the document converter can convert the data structure representation of the electronic document (including the linearised representation of the table) back into the electronic document, as shown in block 116 of Figure 5. As will be appreciated, the document converter can convert the data structure in a number of different manners, such as in a manner the inverse of the manner the document converter converted the electronic document into the intermediate data structure (see block 106). Then, once the document converter 102 has converted the data structure back into the electronic document, where the electronic document now includes a linearised representation of each table included in the original electronic document, the proxy 18 can forward the electronic document to the terminal 10, as shown in block 117. The terminal can thereafter render the electronic document, such as on a display (e.g., display 54). In this regard, for an exemplar rendering of the table of Figure 9 on such a display, see Figure 15.

As shown and described herein, the document converter 102 is capable of receiving an electronic document including at least one table, and thereafter transforming tabular information of the document for rendering by a terminal 10. The document converter can then forward the electronic document, including the transformed tabular information, to the terminal for rendering by the terminal, or more particularly a display (e.g., display 56) of the terminal. It should be noted that in various instances the document converter can forward the electronic document without transforming tabular information of the document. In this regard, as will be appreciated, in various instances, the terminal may support left-right panning within a display window that is larger in width than a display of the terminal. Thus, the document converter can be capable of determining, before transforming the tabular information, whether the terminal recipient of the electronic document supports left-right panning. The document converter can then forward the electronic document without transforming the tabular information. Alternatively, the document converter can request, such as from a user of the terminal, a selection of whether to transform the tabular information of the electronic document or forward the electronic document without transforming the tabular information.

The document converter 102 can be capable of determining the capability of the terminal 10 to pan an electronic document in a number of different manners. For example, the document converter can maintain an internal "device capability" lookup table that includes a listing of one or more recipient devices and indicates whether each support panning electronic documents. In such instances, the document converter can determine the terminal recipient, such as during establishment of a communication session between the terminal and the content source 100 (e.g., HTTP GET), and thereafter perform a lookup of the terminal in the "device capability" lookup table. Then, after requesting a selection of whether to transform the tabular information, the document converter can receive and process the selection accordingly. In this regard, if the user selects to have the electronic document forwarded without transforming the tabular information, the document converter can act accordingly. Otherwise, if the user selects to have the tabular information transformed, or if the terminal does not support panning, the document converter can transform the tabular information, such as in the manner described herein.

As also shown and described herein, the document converter 102 can be operated from any of a number of different network entities such as a terminal 10, proxy 18, or a content source, such as an origin server 22, a SMSC 17, a MMSC 30, a GGSN 28, a user processor 34 or the like. As will be appreciated, however, various of the operations of the document converter, particularly those operations in transforming tabular information comprising at least one table within an electronic document, can be performed independent of a connection to a network. Thus, it should be understood that the network entity operating the document converter can comprise an entity, such as a terminal or a content source (e.g., origin server, SMSC, MMSC, user processor, etc.) not otherwise coupled to a network. In such instances, for example, the network entity can be provided with an electronic document in any of a number of different manners independent of a network, and thereafter the document converter can transform table(s) of such an electronic document, such as in the manner described above.

According to one aspect of the present invention, all or a portion of the system of the present invention, such as all or portions of the terminal 10, proxy 18, origin server 22, SMSC 17, MMSC 30, GGSN 28, and/or user processor 34, generally operates under control of a computer program product (e.g., document converter 102). The computer program product for performing the methods of embodiments of the present invention includes a computer-readable storage medium, such as the non-volatile storage medium, and computer-readable program code portions, such as a series of computer instructions, embodied in the computer-readable storage medium.

In this regard, Figures 5 and 11 are flowcharts of methods, systems and program products according to the invention. It will be understood that each block or step of the flowcharts, and combinations of blocks in the flowcharts, can be implemented by computer program instructions. These computer program instructions may be loaded onto a computer or other programmable apparatus to produce a machine, such that the instructions which execute on the computer or other programmable apparatus create means for implementing the functions specified in the flowcharts block(s) or step(s). These computer program instructions may also be stored in a computer-readable memory that can direct a computer or other programmable apparatus to function in a particular manner, such that the instructions stored in the computer-readable memory produce an article of manufacture including instruction means which implement the function specified in the flowcharts block(s) or step(s). The computer program instructions may also be loaded onto a computer or other programmable apparatus to cause a series of operational steps to be performed on the computer or other programmable apparatus to produce a computer implemented process such that the instructions which execute on the computer or other programmable apparatus. provide steps for implementing the functions specified in the flowcharts block(s) or step(s).

Accordingly, blocks or steps of the flowcharts supports combinations of means for performing the specified functions, combinations of steps for performing the specified functions and program instruction means for performing the specified functions. It will also be understood that each block or step of the flowcharts, and combinations of blocks or steps in the flowcharts, can be implemented by special purpose hardware-based computer systems which perform the specified functions or steps, or combinations of special purpose hardware and computer instructions.

Many modifications and other embodiments of the invention will come to mind to one skilled in the art to which this invention pertains having the benefit of the teachings presented in the foregoing descriptions and the associated drawings. For example, as described above in one implementation, the document converter arranges or rearranges the table(s) such that the tables have row-major ordering, and thereafter processes the tables based upon such row-major ordering. In an alternative implementation, however, the document converter can arrange or rearrange the tables such that the tables have column-major ordering, with the other operations of the document converter adjusted accordingly. For example, the document converter can localize labels for a column-major table having at least one column including at least one label, with the localization process performed in a manner similar to that described herein, typically with operations performed on the basis of rows being performed on the basis of columns, and vice versa. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. A system for transforming tabular information for rendering on a terminal having a limited-area display, the system comprising:

   a network entity comprising a document converter capable of receiving an electronic document including tabular information comprising at least one table, wherein the document converter is capable of converting the at least one table into a linearized representation of the at least one table based upon an ordering of each table, and further based upon at least one label when at least one table includes at least one label.

2. A system according to Claim 1, wherein the document converter is capable of converting the at least one table by arranging the at least one table such that the at least one table has a predefined ordering, localizing each label when at least one table includes at least one label, and thereafter linearizing the at least one table based upon the at least one table arranged to have the predefined ordering, and further based upon each localized label when at least one table includes at least one label.

3. A system according to Claim 2, wherein each table includes a plurality of cells organized in at least one row and at least one column, and wherein the document converter is capable of arranging the at least one table by identifying a natural ordering of the at least one table, and when at least one table has a natural ordering other than the predefined ordering, arranging the at least one table that has a natural ordering other than the predefined ordering such that the respective at least one table has the predefined ordering.

4. A system according to Claim 3, wherein the document converter is capable of determining a characteristic vector for each cell of the table and determining a distance between adjacent cells based upon the characteristic vectors for the respective cells, and wherein the document converter is capable of determining an average distance between pairs of adjacent cells in the same row of the table and an average distance between pairs of adjacent cells in the same column of the table, and thereafter identifying the natural ordering of the table based upon the average distances.

5. A system according to Claim 2, wherein the document converter is capable of arranging the at least one table such that the at least one table has one of a row-major ordering and a column-major ordering.

6. A system according to Claim 1, wherein the document converter is further capable of determining if the terminal supports panning, and if the terminal does support panning, receiving a selection of one of converting the at least one table and forwarding the electronic document without converting the at least one table, and wherein the document converter is capable of converting the at least one table when the selection comprises converting the at least one table.

**7.** A system of localizing at least one label of a table within an electronic document, wherein the table includes a plurality of cells organized in at least one row and at least one column, and wherein the system comprises:

a network entity comprising a document converter capable of identifying at least one of at least one span label and at least one direct label, wherein each span label is associated with a plurality of one of columns and rows of the table and each direct label is associated with one of a single column and a single row of the table, and wherein the document converter is also capable of determining a label string for each cell of the table associated with at least one of a span label and a direct label to thereby localize each span label and each direct label, each label string including at least one of a span label and a direct label.

**8.** A system according to Claim 7, wherein the document converter is capable of identifying at least one direct label based upon a measure of similarity between one of adjacent rows and adjacent columns of the table.

**9.** A system according to Claim 8, wherein the document converter is capable of identifying at least one direct label by determining a measure of similarlity between one of each pair of adjacent rows and each pair of adjacent columns, identifying one of a pair of adjacent rows that is a given percentage more dissimilar than other pairs of adjacent rows, and a pair of adjacent columns that is a given percentage more dissimilar than other pairs of adjacent columns, based upon the measures of similarlity, and thereafter identifying one of a row of the identified pair of adacent rows and a column of the identified pair of adjacent columns as including at least one direct label.

**10.** A system according to Claim 9, wherein the document converter is capable of determining a measure of similarlity by determining a characteristic vector for each cell of one of each pair of adjacent rows and each pair of adjacent columns, determining one of a distance between cells in the same column within adjacent rows, and a distance between cells in the same rows within adjacent columns, based upon the characteristic vectors for the respective cells, and thereafter summing the distances across one of the columns of the adjacent rows and the rows of adjacent columns.

**11.** A terminal comprising:

a memory capable of storing an electronic document including tabular information comprising at least one table; and
a controller capable of converting the at least one table into a linearized representation of the at least one table based upon an ordering of each table, and further based upon at least one label when at least one table includes at least one label.

**12.** A terminal according to Claim 11, wherein the controller is capable of converting the at least one table by arranging the at least one table such that the at least one table has a predefined ordering, localizing each label when at least one table includes at least one label, and thereafter linearizing the at least one table based upon the at least one table arranged to have the predefined ordering, and further based upon each localized label when at least one table includes at least one label.

**13.** A terminal according to Claim 12, wherein each table includes a plurality of cells organized in at least one row and at least one column, and wherein the controller is capable of arranging the at least one table by identifying a natural ordering of the at least one table, and when at least one table has a natural ordering other than the predefined ordering, arranging the at least one table that has a natural ordering other than the predefined ordering such that the respective at least one table has the predefined ordering.

**14.** A terminal according to Claim 13, wherein the controller is capable of determining a characteristic vector for each cell of the table and determining a distance between adjacent cells based upon the characteristic vectors for the respective cells, and wherein the controller is capable of determining an average distance between pairs of adjacent cells in the same row of the table and an average distance between pairs of adjacent cells in the same column of the table, and thereafter identifying the natural ordering of the table based upon the average distances.

**15.** A terminal according to Claim 12, wherein the controller is capable of arranging the at least one table such that the at least one table has one of a row-major ordering and a column-major ordering.

**16.** A system according to Claim 11, wherein the controller is further capable of determining if the terminal supports panning, and if the terminal does support panning, receiving a selection of one of converting the at least one table and forwarding the electronic document without converting the at least one table, and wherein the controller is capable of converting the at least one table when the selection comprises converting the at least one table.

**17.** A terminal comprising:

a memory capable of storing an electronic document including tabular information comprising at least one table, each table including a plurality of cells organized in at least one row and at least one column;
a controller capable of identifying at least one of at least one span label and at least one direct label, wherein each span label is associated with a plurality of one of columns and rows of the table and each direct label is associated with one of a single column and a single row of the table, and wherein the controller is also capable of determining a label string for each cell of the table associated with at least one of a span label and a direct label to thereby localize each span label and each direct label, each label string including at least one of a span label and a direct label.

**18.** A terminal according to Claim 17, wherein the controller is capable of identifying at least one direct label based upon a measure of similarity between one of adjacent rows and adjacent columns of the table.

**19.** A terminal according to Claim 18, wherein the controller is capable of identifying at least one direct label by determining a measure of similarlity between one of each pair of adjacent rows and each pair of adjacent columns, identifying one of a pair of adjacent rows that is a given percentage more dissimilar than other pairs of adjacent rows, and a pair of adjacent columns that is a given percentage more dissimilar than other pairs of adjacent columns, based upon the measures of similarlity, and thereafter identifying one of a row of the identified pair of adacent rows and a column of the identified pair of adjacent columns as including at least one direct label.

**20.** A terminal according to Claim 19, wherein the controller is capable of determining a measure of similarlity by determining a characteristic vector for each cell of one of each pair of adjacent rows and each pair of adjacent columns, determining one of a distance between cells in the same column within adjacent rows, and a distance between cells in the same rows within adjacent columns, based upon the characteristic vectors for the respective cells, and thereafter summing the distances across one of the columns of the adjacent rows and the rows of adjacent columns.

**21.** A method of transforming tabular information for rendering on a terminal having a limited-area display, the method comprising:

receiving an electronic document including tabular information comprising at least one table; and
converting the at least one table into a linearized representation of the at least one table based upon an ordering of each table, and further based upon at least one label when at least one table includes at least one label.

**22.** A method according to Claim 21, wherein converting the at least one table comprises:

arranging the at least one table such that the at least one table has a predefined ordering;
localizing each label when at least one table includes at least one label; and
linearizing the at least one table based upon the at least one table arranged to have the predefined ordering, and further based upon each localized label when at least one table includes at least one label.

**23.** A method according to Claim 22, wherein each table includes a plurality of cells organized in at least one row and at least one column, and wherein arranging the at least one table comprises:

identifying a natural ordering of the at least one table; and when at least one table has a natural ordering other than the predefined ordering,
arranging the at least one table that has a natural ordering other than the predefined ordering such that the respective at least one table has the predefined ordering.

**24.** A method according to Claim 23, wherein identifying a natural ordering comprises for each table:

determining a characteristic vector for each cell of the table;
determining a distance between adjacent cells based upon the characteristic vectors for the respective cells;
determining an average distance between pairs of adjacent cells in the same row of the table and an average distance between pairs of adjacent cells in the same column of the table; and
identifying the natural ordering of the table based upon the average distances.

**25.** A method according to Claim 22, wherein arranging the at least one table comprises arranging the at least one table such that the at least one table has one of a row-major ordering and a column-major ordering.

**26.** A method according to Claim 21 further comprising:

determining if the terminal supports panning; and if the terminal does support panning,
receiving a selection of one of converting the at least one table and forwarding the electronic document without converting the at least one table,

wherein converting the at least one table comprises converting the at least one table when the selection comprises converting the at least one table.

**27.** A method of localizing at least one label of a table within an electronic document, wherein the table includes a plurality of cells organized in at least one row and at least one column, and wherein the method comprises:

identifying at least one of at least one span label and at least one direct label, wherein each span label is associated with a plurality of one of columns and rows of the table and each direct label is associated with one of a single column and a single row of the table; and
determining a label string for each cell of the table associated with at least one of a span label and a direct label to thereby localize each span label and each direct label, each label string including at least one of a span label and a direct label.

**28.** A method according to Claim 27, wherein identifying at least one direct label comprises identifying at least one direct label based upon a measure of similarity between one of adjacent rows and adjacent columns of the table.

**29.** A method according to Claim 28, wherein identifying at least one direct label comprises:

determining a measure of similarlity between one of each pair of adjacent rows and each pair of adjacent columns; and
identifying one of a pair of adjacent rows that is a given percentage more dissimilar than other pairs of adjacent rows, and a pair of adjacent columns that is a given percentage more dissimilar than other pairs of adjacent columns, based upon the measures of similarlity; and
identifying one of a row of the identified pair of adacent rows and a column of the identified pair of adjacent columns as including at least one direct label.

**30.** A method according to Claim 29, wherein determining a measure of similarlity comprises:

determining a characteristic vector for each cell of one of each pair of adjacent rows and each pair of adjacent columns;
determining one of a distance between cells in the same column within adjacent rows, and a distance between cells in the same rows within adjacent columns, based upon the characteristic vectors for the respective cells; and
summing the distances across one of the columns of the adjacent rows and the rows of adjacent columns.

**31.** A signal comprising computer readable instructions for controlling computer apparatus for carrying out the method of cny of claims 21 to 30.

**32.** A medium having stored thereon computer readable instructions for controlling computer apparatus for carrying out the method of any of claims 21 to 30.

# FIG. 1.

40 — INTERFACE

36 — PROCESSOR

38 — MEMORY

## FIG. 2.

58    60    62

RF    IR    BT

TRANSMITTER

VC — 46A
DM — 46B

42    46

44

RECEIVER

CONTROLLER

DISPLAY — 54

KEYPAD

56

RINGER

50

SPEAKER

48

MICROPHONE

52

66    68

VOLATILE MEMORY    NON-VOLATILE MEMORY

SIM — 64

## FIG. 3.

18
10
PROXY
100

TERMINAL ↔ | DOCUMENT CONVERTER | ↔ CONTENT SOURCE

102

# FIG. 4.

HTML

BODY

IMAGE        TABLE        SMALL

TR        TR        TEXT BLOCK

TD TD TD        TD TD TD

IMAGE        IMAGE

# FIG. 6.

START

104 — RECEIVING DOCUMENT INCLUDING TABLE(S)

106 — CONVERT DOCUMENT INTO INTERMEDIATE DATA STRUCTURE

108 — IDENTIFY IMPLICIT TABLE(S)

110 — REARRANGE TABLE(S) TO PREDEFINED ORDERING

112 — LOCALIZE ANY LABELS IN TABLE(S)

114 — LINEARIZE TABLE INTO ONE-DIMENSIONAL SEQUENCE OF CELLS

116 — CONVERT INTERMEDIATE DATA STRUCTURE INTO DOCUMENT

117 — FORWARD DOCUMENT TO TERMINAL FOR RENDERING

STOP

# FIG. 5.

**FIG. 7A.**

| ACTIVITY | CALORIES/HOUR |
|---|---|
| AEROBICS | 660 |
| BASKETBALL | 550 |
| RUNNING | 925 |
| TENNIS | 450 |

**FIG. 7B.**

EP 1 550 961 A1

| | APR | STATE |
|---|---|---|
| EQUITY RESERVE[SM] LINE | 4.25% | OH |
| HOME EQUITY INSTALLMENT LOAN | 6.06% | OH |
| SIGNATURE CREDIT LINE | 8.75% | IN |
| NEW AUTOMOBILE LOAN | 6.62% | IN |

# FIG. 8A.

| 0000001000000 | 0000001000000 | 0000001000000 |
|---|---|---|
| 0000000000100 | 01000**↓**1000000 | 0000001000000 |
| 0000000000010 | 0100011000000 | 0000001000000 |
| 0000000000100 | 0100011000000 | 0000001000000 |
| 0000000000100 | 0100011000000 | 0000001000000 |

# FIG. 8B.

| YR | TM | REGULAR SEASON | | | | | | | | | | | | POST SEASON | | | | |
|---|---|---|---|---|---|---|---|---|---|---|---|---|---|---|---|---|---|---|
| | | GP | G | A | PTS | PIM | +/- | PPG | PPA | SHG | SHA | SHOTS | PCT | GP | G | A | PTS | PIM |
| 84-85 | Pit | 73 | 43 | 57 | 100 | 54 | -35 | 11 | 22 | 0 | -- | 209 | 20.6 | -- | -- | -- | -- | -- |
| 85-86 | Pit | 79 | 48 | 93 | 141 | 43 | -6 | 17 | 45 | 0 | -- | 276 | 17.4 | -- | -- | -- | -- | -- |
| 86-87 | Pit | 63 | 54 | 53 | 107 | 57 | 13 | 19 | 19 | 0 | -- | 267 | 20.2 | -- | -- | -- | -- | -- |
| 87-88 | Pit | 77 | 70 | 98 | 168 | 92 | 23 | 22 | 58 | 10 | -- | 382 | 18.3 | -- | -- | -- | -- | -- |
| 88-89 | Pit | 76 | 85 | 114 | 199 | 100 | 41 | 31 | 49 | 13 | -- | 313 | 27.2 | 11 | 12 | 7 | 19 | 16 |
| 89-90 | Pit | 59 | 45 | 78 | 123 | 78 | -18 | 14 | 35 | 3 | -- | 226 | 19.9 | -- | -- | -- | -- | -- |
| 90-91 | Pit | 26 | 19 | 26 | 45 | 30 | 8 | 6 | 8 | 1 | 0 | 89 | 21.3 | 23 | 16 | 28 | 44 | 16 |
| 91-92 | Pit | 64 | 44 | 87 | 131 | 94 | 27 | 12 | 35 | 4 | 6 | 249 | 17.7 | 15 | 16 | 18 | 34 | 2 |
| 92-93 | Pit | 60 | 69 | 91 | 160 | 38 | 55 | 16 | 39 | 6 | 3 | 286 | 24.1 | 11 | 8 | 10 | 18 | 10 |
| 93-94 | Pit | 22 | 17 | 20 | 37 | 32 | -2 | 7 | 8 | 0 | 0 | 92 | 18.5 | 6 | 4 | 3 | 7 | 2 |
| 95-96 | Pit | 70 | 69 | 92 | 161 | 54 | 10 | 31 | 48 | 8 | 1 | 338 | 20.4 | 18 | 11 | 16 | 27 | 33 |
| 96-97 | Pit | 76 | 50 | 72 | 122 | 65 | 27 | 15 | 22 | 2 | 3 | 327 | 15.3 | 5 | 3 | 3 | 6 | 4 |
| 00-01 | Pit | 43 | 35 | 41 | 76 | 18 | 15 | 16 | 16 | 1 | 0 | 171 | 20.5 | 18 | 6 | 11 | 17 | 4 |
| | | GP | G | A | PTS | PIM | +/- | PPG | PPA | SHG | SHA | SHOTS | PCT | GP | G | A | PTS | PIM |
| Totals | | 788 | 648 | 922 | 1570 | 755 | 158 | 217 | 404 | 48 | -- | 3225 | 20.1 | 107 | 76 | 96 | 172 | 87 |

## FIG. 9.

YR TM GP G A
PTS PIM +/- PPG
PPA SHG SHA
SHOTS PCT HP G
A PTS PIM
84-85 Pit 73 43 57
100 54 -34 11 22 0

**FIG. 10A.**

A PTS PIM
84-85 Pit 73 43 57
100 54 -34 11 22 0
-- 209 20.6 -- -- -- --
--
85-86 Pit 79 48 93
141 43 -6 17 45 0 --
276 17.4 -- -- -- --

**FIG. 10B.**

**FIG. 11.**

**FIG. 12.**

FIG. 13A.

FIG. 13C.

FIG. 13B.

**YR:** 84-85 **TM:** Pit
REGULAR
SEASON
**GP:** 73 **G:** 43 **A:**
57 **PTS:** 100 **PIM:**
54 **+/-:** -35 **PPG:** 11

**YR:** 85-86 **TM:** Pit

FIG. 15.

**YR:** 84-85 **TM:** Pit
REGULAR SEASON
  **GP:** 73 **G:** 43 **A:** 57 **PTS:** 100 **PIM:** 54 **+/-:** -35 **PPG:** 11 **PPA:** 22 **SHG:** 0 **SHA:** -- **SHOTS:** 209 **PCT:** 20.6
POST SEASON
  **GP:** -- **G:** -- **A:** -- **PTS:** -- **PIM:** --

**YR:** 85-86 **TM:** Pit
REGULAR SEASON
  **GP:** 79 **G:** 48 **A:** 93 **PTS:** 141 **PIM:** 43 **+/-:** -6 **PPG:** 17 **PPA:** 45 **SHG:** 0 **SHA:** -- **SHOTS:** 276 **PCT:** 17.4
POST SEASON
  **GP:** -- **G:** -- **A:** -- **PTS:** -- **PIM:** --

**YR:** 86-87 **TM:** Pit
REGULAR SEASON
  **GP:** 63 **G:** 54 **A:** 53 **PTS:** 107 **PIM:** 57 **+/-:** 13 **PPG:** 19 **PPA:** 19 **SHG:** 0 **SHA:** -- **SHOTS:** 267 **PCT:** 20.2
POST SEASON
  **GP:** -- **G:** -- **A:** -- **PTS:** -- **PIM:** --

**YR:** 87-88 **TM:** Pit
REGULAR SEASON
  **GP:** 77 **G:** 70 **A:** 98 **PTS:** 168 **PIM:** 92 **+/-:** 23 **PPG:** 22 **PPA:** 58 **SHG:** 10 **SHA:** -- **SHOTS:** 382 **PCT:** 18.3
POST SEASON
  **GP:** -- **G:** -- **A:** -- **PTS:** -- **PIM:** --

**YR:** 88-89 **TM:** Pit
REGULAR SEASON
  **GP:** 76 **G:** 85 **A:** 114 **PTS:** 199 **PIM:** 100 **+/-:** 41 **PPG:** 31 **PPA:** 49 **SHG:** 13 **SHA:** -- **SHOTS:** 313 **PCT:** 37.2
POST SEASON
  **GP:** 11 **G:** 12 **A:** 7 **PTS:** 19 **PIM:** 16

**YR:** 89-90 **TM:** Pit
REGULAR SEASON
  **GP:** 59 **G:** 45 **A:** 78 **PTS:** 123 **PIM:** 78 **+/-:** -18 **PPG:** 14 **PPA:** 35 **SHG:** 3 **SHA:** -- **SHOTS:** 226 **PCT:** 19.9
POST SEASON
  **GP:** -- **G:** -- **A:** -- **PTS:** -- **PIM:** --

# FIG. 14.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BICKMORE T ET AL: "Web Page Filtering and Re-Authoring for Mobile Users" COMPUTER JOURNAL, vol. 42, no. 6, 1999, pages 534-546, XP000920338 OXFORD UNIVERSITY PRESS, SURREY, GB ISSN: 0010-4620 | 1-3,5,6, 11-13, 15,16, 21-23, 25,26, 31,32 | G06F17/30 |
| Y | * abstract * * page 535, left-hand column, line 39 - line 42; figure 1 * * page 538, right-hand column, paragraphs 3,4 * | 4,14,24 | |
| Y | CHEN H H ET AL: "Mining Tables from Large Scale HTML Texts" PROCEEDING OF THE 17TH CONFERENCE ON COMPUTATIONAL LINGUISTICS, [Online] vol. 1, 2000, pages 166-172, XP002298646 MORRISTOWN, NJ, USA Retrieved from the Internet: URL:http://delivery.acm.org/10.1145/100000 0/990845/p166-chen.pdf?key1=990845&key2=64 30206901&coll=GUIDE&dl=GUIDE&CFID=27897336 &CFTOKEN=98809905> [retrieved on 2004-09-24] | 4,14,24 | TECHNICAL FIELDS SEARCHED (Int.Cl.7)  G06F |
| A | * abstract * * paragraph 3 titled "Table Recognition" * | 1,7,11, 17,21, 27,31,32 | |

-----

-/--

The present search report has been drawn up for all claims

| Place of search | Date of completion of the search | Examiner |
|---|---|---|
| Berlin | 30 September 2004 | Barieux, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

European Patent
Office

Application Number

EP 04 25 0004

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | SILBERHORN H: "TabulaMagica - an integrated approach to manage complex tables" PROCEEDINGS OF DOCENG '01 SYMPOSIUM ON DOCUMENT ENGINEERING WORKSHOP, [Online] 9 November 2001 (2001-11-09), pages 68-75, XP002298647 ATLANTA, GA, USA Retrieved from the Internet: URL:http://delivery.acm.org/10.1145/510000 /502198/p68-silberhorn.pdf?key1=502198&key 2=4835356901&coll=Portal&dl=GUIDE&CFID=278 04761&CFTOKEN=98657580> [retrieved on 2004-09-24] | 7-10, 17-20, 27-32 | |
| A | * abstract * * paragraph 3 titled "Challenges in processing complex tables" * * paragraph 4.1 titled "The structural model", figure 1 * * paragraph 4.2 titled "The presentation model", figure 2 * * paragraph 4.4 titled "Import of existing tables" * ----- | 1,11,21 | |
| A | WO 01/86462 A (LEAP WIRELESS INTERNATIONAL IN) 15 November 2001 (2001-11-15) * abstract * * page 18, last paragraph - page 19, paragraph 1; figure 5 * * page 23, paragraph 1 * ----- | 1,6,7, 11,16, 17,21, 26,27, 31,32 | TECHNICAL FIELDS SEARCHED (Int.Cl.7) |

-/--

The present search report has been drawn up for all claims

| Place of search | Date of completion of the search | Examiner |
|---|---|---|
| Berlin | 30 September 2004 | Barieux, M |

EPO FORM 1503 03.82 (P04C01)

**European Patent Office**

## EUROPEAN SEARCH REPORT

Application Number

EP 04 25 0004

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | LIM S-J ET AL: "AN AUTOMATED APPROACH FOR RETRIEVING HIERARCHICAL DATA FROM HTML TABLES" PROCEEDINGS OF THE 8TH. INTERNATIONAL CONFERENCE ON INFORMATION KNOWLEDGE MANAGEMENT. CIKM'99, 2 November 1999 (1999-11-02), pages 466-474, XP000895334 KANSAS CITY, MISSOURI, ISBN: 1-58113-146-1 * abstract * * page 467, left-hand column, paragraph 1 - right-hand column, paragraph 1; figure 3 * * page 468, right-hand column, last paragraph - page 469, left-hand column, paragraph 1 * ----- | 1,7,11, 17,21, 27,31,32 | |

TECHNICAL FIELDS SEARCHED (Int.Cl.7)

The present search report has been drawn up for all claims

| Place of search | Date of completion of the search | Examiner |
|---|---|---|
| Berlin | 30 September 2004 | Barieux, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................................
& : member of the same patent family, corresponding document

EPO FORM 1503 03.82 (P04C01)

European Patent
Office

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

**LACK OF UNITY OF INVENTION SHEET B**

Application Number

EP 04 25 0004

The Search Division considers that the present European patent application does not comply with the requirements of unity of invention and relates to several inventions or groups of inventions, namely:

```
1. claims: 1-6, 11-16, 21-26, 31, 32

               Linearizing a table
                     ---

2. claims: 7-10, 17-20, 27-30

               Localizing labels in a table
                     ---
```

**ANNEX TO THE EUROPEAN SEARCH REPORT
ON EUROPEAN PATENT APPLICATION NO.**                    EP 04 25 0004

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2004

| Patent document cited in search report | Publication date | Patent family member(s) | Publication date |
|---|---|---|---|
| WO 0186462 A | 15-11-2001 | AU    5959001 A<br>WO    0186462 A1 | 20-11-2001<br>15-11-2001 |

EPO FORM P0459

For more details about this annex : see Official Journal of the European Patent Office, No. 12/82